(19) **Europäisches Patentamt / European Patent Office / Office européen des brevets**

(11) **EP 4 270 530 B1**

(12) # EUROPEAN PATENT SPECIFICATION

(45) Date of publication and mention
of the grant of the patent:
**29.07.2026  Bulletin 2026/31**

(21) Application number: **21910893.3**

(22) Date of filing: **22.12.2021**

(51) International Patent Classification (IPC):
$H01M\ 4/133^{(2010.01)}$     $H01M\ 4/587^{(2010.01)}$
$H01M\ 4/62^{(2006.01)}$     $H01M\ 10/052^{(2010.01)}$
$H01M\ 10/0562^{(2010.01)}$     $H01M\ 4/02^{(2006.01)}$

(52) Cooperative Patent Classification (CPC):
**H01M 4/587; H01M 4/133; H01M 4/62;
H01M 10/052; H01M 10/0562;** H01M 2004/027;
H01M 2300/0068; Y02E 60/10

(86) International application number:
**PCT/JP2021/047668**

(87) International publication number:
**WO 2022/138753 (30.06.2022 Gazette 2022/26)**

(54) **NEGATIVE ELECTRODE FOR ALL-SOLID-STATE BATTERY, ALL-SOLID-STATE BATTERY, AND NEGATIVE-ELECTRODE ACTIVE MATERIAL FOR ALL-SOLID-STATE BATTERY**

NEGATIVELEKTRODE FÜR FESTKÖRPERBATTERIE, FESTKÖRPERBATTERIE UND NEGATIVELEKTRODENAKTIVMATERIAL FÜR FESTKÖRPERBATTERIE

ÉLECTRODE NÉGATIVE POUR BATTERIE TOUT SOLIDE, BATTERIE TOUT SOLIDE, ET MATÉRIAU ACTIF D'ÉLECTRODE NÉGATIVE POUR BATTERIE TOUT SOLIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.12.2020  JP 2020215777**

(43) Date of publication of application:
**01.11.2023  Bulletin 2023/44**

(73) Proprietor: **Resonac Corporation
Tokyo 105-7325 (JP)**

(72) Inventors:
- **HOSHI, Kento
  Tokyo 100-6606 (JP)**
- **KUBOTA, Takashi
  Tokyo 100-6606 (JP)**
- **HOMBOH, Hidetoshi
  Tokyo 100-6606 (JP)**

(74) Representative: **Berggren Oy
P.O. Box 16
Fabianinkatu 21
00101 Helsinki (FI)**

(56) References cited:
| | |
|---|---|
| EP-A1- 3 872 901 | EP-A1- 4 099 431 |
| WO-A1-2017/169616 | WO-A1-2019/009072 |
| WO-A1-2020/137909 | JP-A- 2011 134 617 |
| JP-A- 2011 134 617 | JP-A- 2014 229 517 |
| JP-A- 2019 532 469 | JP-A- 2021 136 239 |
| US-A1- 2002 061 445 | US-A1- 2019 237 755 |

- IMERYS GRAPHITE & CARBON: "SPECIALTY CARBONS FOR SINTERED FRICTION MATERIALS", 3 June 2022 (2022-06-03), pages 1 - 12, XP093274699, Retrieved from the Internet <URL:https://www.imerys.com/public/2022-06/imerys-business-documentation-specialty-carbons-for-sintered-friction-materials-june-2022.pdf>

- BUQA H. ET AL: "Behaviour of highly crystalline graphites in lithium-ion cells with propylene carbonate containing electrolytes", vol. 146, no. 1-2, 25 April 2005 (2005-04-25), AMSTERDAM, NL, pages 134 - 141, XP093274711, ISSN: 0378-7753, Retrieved from the Internet <URL:https://pdf.sciencedirectassets.com/ 271367/1-s2.0-S0378775305X02853/ 1-s2.0-S0378775305005185/main.pdf> DOI: 10.1016/j.jpowsour.2005.03.106

**Description**

[Technical Field]

The present disclosure relates to a negative electrode for an all-solid-state battery, an all-solid-state battery, and a negative-electrode active material for an all-solid state battery.

[Background Art]

Lithium ion secondary batteries are widely used as a rechargeable power source for various kinds of electronic devices. In recent years, research and development have been conducted on the use of lithium ion secondary batteries as a power source for automobiles such as electric vehicles and hybrid vehicles.

In most of the commercially available lithium ion secondary batteries, a liquid-type electrolyte, in which an electrolyte is dissolved in a flammable organic solvent, is used. Therefore, lithium ion secondary batteries need to be provided with a countermeasure against a temperature increase that may be caused by a short circuit, such as a safety device. In view of this, a secondary battery using a solid-state electrolyte, referred to as an all-solid-state battery, has been proposed. The all-solid-state battery has an advantage in terms of safety over lithium ion secondary batteries including an electrolyte with an organic solvent. Consequently, the all-solid-state battery is thought to exhibit excellent cost efficiency and productivity as a result of simplifying a safety device.

The all-solid-state battery is mainly composed of a positive electrode that includes a positive-electrode active material, a solid electrolyte layer, and a negative electrode that includes a negative-electrode active material. While lithium titanate (LTO) is a major negative-electrode active material for current all-solid-state batteries, use of a carbon material such as graphite as a negative-electrode active material has also been proposed (see, for example, Japanese Patent Application Laid-Open No. 2018-206487).

Patent Application JP 2011 134617 A also discloses an all solid state battery wherein the negative electrode comprises as carbon material a graphite with an interplanar spacing $d_{002}$ of 0.338 nm, and as solid electrolyte an oxide-type lithium solid electrolyte.

Furthermore US 2019/237755 A1 discloses a negative electrode for a Li-ion battery with a liquid electrolyte; the electrode comprises a carbonaceous particulate material which has a spring-back of at least 20%; this spring-back is measured according to ASTM B 329-98 (2003) by applying a defined compression force and then recording a powder height when the pressure is applied and after the pressure has been released (the spring-back being the height difference in percent relative to the height under pressure).

[Summary of Invention]

[Problem to be Solved]

Although carbon materials are regarded as a promising negative-electrode active material in terms of cost efficiency or the like, carbon materials have room for improvement in terms of their cycle characteristics (i.e., a maintenance ratio in battery capacity when repeating charging and discharging). Further, improvement in the initial charge/discharge efficiency of carbon materials is desired from the viewpoint of increasing the battery capacity.

In view of the foregoing, the present disclosure aims to provide a negative electrode for an all-solid-state battery that can produce an all-solid-state battery that exhibits an excellent cycle characteristic and an excellent initial charge/-discharge efficiency; an all-solid-state battery having the negative electrode; and a negative-electrode active material for the all-solid state battery.

[Means for Solving Problem]

The invention is defined by the appended claims.

[Effect of Invention]

According to the present disclosure, it is possible to provide a negative electrode for an all-solid-state battery that can produce an all-solid-state battery that exhibits an excellent cycle characteristic and an excellent initial charge/-discharge efficiency; an all-solid-state battery having the negative electrode; and a negative-electrode active material for the all-solid state battery.

[Brief Description of Drawing]

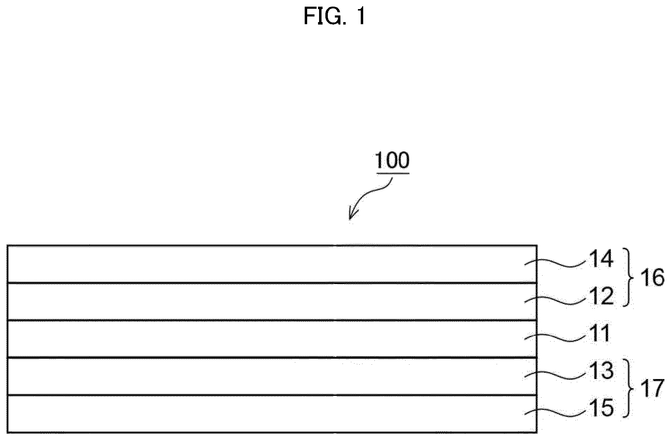

Fig. 1 is a schematic sectional view illustrating an exemplary configuration of an all-solid-state battery.

[Embodiments for Carrying out Invention]

Embodiments for carrying out the present disclosure will now be described in detail. However, the present disclosure is in no way limited to the following embodiments.

In the following embodiments, constituent elements (including element steps and the like) of the embodiments are not essential, unless otherwise specified. Likewise, numerical values and ranges thereof are not intended to restrict the present disclosure.

In the present disclosure, the definition of the term "step" includes not only an independent step which is distinguishable from another step, but also a step which is not clearly distinguishable from another step, as long as the purpose of the step is achieved.

In the present disclosure, any numerical range described using the expression "from * to" represents a range in which numerical values described before and after the "to" are included in the range as a minimum value and a maximum value, respectively.

In a numerical range described in stages, in the present disclosure, an upper limit value or a lower limit value described in one numerical range may be replaced with an upper limit value or a lower limit value in another numerical range described in stages. Further, in a numerical range described in the present disclosure, the upper limit value or the lower limit value in the numerical range may be replaced with a value shown in the Examples.

In the present disclosure, each component may include plural kinds of substances corresponding to the component. In a case in which plural kinds of substances corresponding to each component are present in a composition, the content ratio or content of each component refers to the total content ratio or content of the plural kinds of substances present in the composition, unless otherwise specified.

In the present disclosure, particles corresponding to each component may include plural kinds of particles. In a case in which plural kinds of particles corresponding to each component are present in a composition, the particle size of each component refers to the value of the particle size of a mixture of the plural kinds of particles present in the composition, unless otherwise specified.

In the present disclosure, the term "layer" includes a layer being disposed at either a part of a region or an entire region, when a region at which the layer or film exists is observed.

<Negative electrode for all-solid-state battery>

The negative electrode for an all-solid-state battery according to the present disclosure (hereinafter, also referred to as a negative electrode) includes a negative-electrode active material and a solid electrolyte, and the negative-electrode active material includes a carbon material that has an interplanar spacing ($d_{002}$) of from 0.336 nm to less than 0.350 and a spring-back ratio of 13% or more.

An all-solid-state battery, in which the above-noted negative electrode is used, exhibits an excellent cycle characteristic as compared with conventional all-solid-state batteries using a carbon material as a negative-electrode active material. While the reason for this remains somewhat unclear, it is thought to be as follows.

The all-solid-state battery is mainly composited of a positive electrode including a positive-electrode active material, a layer including a solid electrolyte (hereinafter, also referred to as a solid-electrolyte layer) and a negative electrode including a negative-electrode active material. A solid electrolyte is included also in the negative electrode in order to promote the conduction of ions toward the negative electrode, and therefore a solid electrolyte is in contact with a negative-electrode active material in the negative electrode.

Carbon materials are known as a material that exhibits a significant degree of volume change due to absorption and desorption of ions. Therefore, an all-solid state battery using a carbon material as a negative-electrode active material is prone to a decrease in the contact area with respect to a solid electrolyte, breakage of particles, or the like, due to a volume change of a carbon material that occurs during the repetitive charging and discharging, thereby deteriorating the cycle characteristic.

The carbon material used in the present disclosure as a negative-electrode active material exhibits a spring-back ratio of 13% or more.

The spring-back ratio of a carbon material refers to an index of a degree of returning, from a pressurized state, to an original state when pressure is removed. The greater the spring-back ratio of a carbon material is, the more likely it is that the carbon material will return to its original state.

It is thought that a carbon material having a spring-back ratio of 13% or more is less prone to irreversible deformation, such as breakage of particulate structures, as compared with a carbon material having a spring-back ratio of less than 13%. As a result, it is thought that a sufficient amount of contact area of a carbon material with respect to a solid electrolyte is maintained while repeating charging and discharging, thereby suppressing a deterioration in cycle characteristics.

In addition to the above, the present inventor has found that an all-solid state battery using a carbon material having an interplanar spacing ($d_{002}$) measured by XRD of less than 0.350 nm exhibits a favorable initial charge/discharge efficiency, as compared with an all-solid state battery using a carbon material having an interplanar spacing ($d_{002}$) measured by XRD of 0.350 nm or more.

While the reason for this remains somewhat unclear, it is thought that lithium ions inserted in the layers of carbon are less likely to desorb therefrom.

(Negative-electrode active material)

The negative-electrode active material includes a carbon material having an interplanar spacing ($d_{002}$) measured by XRD of from 0.336 nm to less than 0.350 nm.

The interplanar spacing ($d_{002}$) of a carbon material indicates a degree of disorder in a crystal structure of a carbon material. A carbon material having an interplanar spacing ($d_{002}$) of less than 0.340 nm may be referred to as a graphitic material, and a carbon material having an interplanar spacing ($d_{002}$) of 0.340 nm or more may be referred to as a non-graphitic material.

Among the non-graphitic materials, a carbon material having an interplanar spacing ($d_{002}$) of from 0.340 nm to less than 0.350 nm may be referred to as soft carbon (graphitizable carbon), and a carbon material having an interplanar spacing ($d_{002}$) of 0.350 nm or more may be referred to as hard carbon (non-graphitizable carbon).

From the viewpoint of suppressing a volume change due to absorption and desorption of lithium ions, the specific carbon material has an interplanar spacing ($d_{002}$) of 0.336 nm or more. The specific carbon material may have an interplanar spacing ($d_{002}$) of any one of 0.339 nm or more, 0.340 nm or more, 0.342 nm or more, or 0.343 nm or more.

The greater the interplanar spacing ($d_{002}$) of a specific carbon material is, the smaller the degree of volume change of the specific carbon material due to absorption and desorption of lithium ions tends to be. Therefore, it is thought that breakage of particles while repeating charging and discharging is suppressed, a sufficient amount of contact area with respect to a solid electrolyte is maintained, and deterioration in cycle characteristics is further suppressed.

The interplanar spacing ($d_{002}$) of a specific carbon material is not particularly limited, as long as it is within a range of from 0.336 nm to less than 0.350 nm, and may be 0.349 nm or less, or 0.348 nm or less.

In the present disclosure, the interplanar spacing ($d_{002}$) of a carbon material is measured by the following method.

A sample is prepared by mixing a carbon material with a silicon powder, which is an internal standard material for correcting a position of a diffraction peak, at a mass ratio (carbon mateiral:silicon powder) of 3:2 in an agate mortar for 3 minutes. Subsequently, the sample is exposed to X-rays under the following conditions, thereby obtaining a spectrum of diffraction peaks corresponding to a (110) plane of silicon and a (002) plane of carbon.

(Measurement conditions)

Specific X-rays: CuKα
Scanning rate: 0.25°/min
Divergence slit: 1°
Scattering slit: 1°
Light-receiving slit: 1°

A interplanar spacing ($d_{002}$) is calculated from the Bragg's equation, i.e., the following formula (1) in which $\theta_{Si(111)}$ represents a diffraction angle corresponding to a (111) plane of silicon and $\theta_{C(002)}$ represents a diffraction angle corresponding to a (002) plane of carbon.

In formula (1), the theoretical value of a diffraction angle corresponding to a (111) plane of silicon, i.e., $\theta_{Si-theoretical(111)}$, is 14.221 and λ represents a wavelength of X-rays (0.15418 nm in case of CuKα).

$$d_{002} = \lambda/2 \sin\left(\theta_{C(002)} + \theta_{Si-theoretical\ (111)} - \theta_{Si(111)}\right) \quad \cdot \ \cdot \ \cdot \ \cdot \ (1)$$

The specific carbon material may be included in the negative electrode singly or in combination of two or more kinds having different values of interplanar spacing ($d_{002}$).

Measurement of the spring-back ratio of a carbon material is conducted by the following method.

A carbon material (3.000 (±0.005) grams) is loaded into a cylindrical mold (diameter: 15.0 mm). The carbon material is pressurized in a uniaxial manner with an autograph until the density of the carbon material reaches 1.65 g/cm$^3$. Thereafter, the amount of pressure is reduced to 0N, and the carbon material is maintained at this state (0N) for 30 seconds. Thereafter, the carbon material is pressurized with an autograph, and a density of the carbon material $\rho_{after}$ (g/cm$^3$) is measured when the amount of pressure reaches 2N. The spring-back ratio of the carbon material is calculated by the following equation.

$$\text{Spring-back ratio (\%)} = \{(1.65 - \rho_{after})/1.65\} \times 100$$

From the viewpoint of cycle characteristics, the spring-back ratio of the specific carbon material may be any one of 14% or more, 15% or more, 17% or more, 18% or more, or 20% or more.

The upper limit of the spring-back ratio of the specific carbon material is not particularly limited. The spring-back ratio of the specific carbon material may be any one of 65% or less, 60% or less, 50% or less, 40% or less, or 35% or less.

Examples of the method for adjusting the spring-back ratio of the specific carbon material include adjusting a degree of graphitization, a particle shape or a particle size distribution of the carbon material, or reducing the amount of pores in the carbon material.

The specific carbon material is preferably in a state of particles. The specific carbon material in a state of particles may be primary particles (not granulated) or secondary particles (granulated).

When the specific carbon material is in a state of particles, the volume average particle size thereof is preferably from 5 $\mu$m to 30 $\mu$m. When the volume average particle size of the specific carbon material is 5 $\mu$m or more, initial charge/discharge efficiency tends to improve. When the volume average particle size of the specific carbon material is 30 $\mu$m or less, input/output characteristics tend to improve.

The volume average particle size of the specific carbon material may be any one of 8 $\mu$m or more, 10 $\mu$m or more, or 12 $\mu$m or more. The volume average particle size of the specific carbon material may be any one of 28 $\mu$m or less, 26 $\mu$m or less, or 24 $\mu$m or less.

In the present disclosure, the volume average particle size of particles refers to a particle size at which an accumulation of volume from the side of smaller size is 50% in a volume-based particle size distribution measured by a laser diffraction-scattering method (median diameter, D50).

Measurement of the volume average particle size may be conducted on particles that are dispersed in water using a laser diffraction/scattering particle distribution analyzer, for example.

The specific carbon material preferably has a BET specific surface area based on nitrogen adsorption of from 0.5 m$^2$/g to 10 m$^2$/g.

When the BET specific surface area of the specific carbon material is 0.5 m$^2$/g or more, input/output characteristics tend to improve. When the BET specific surface area of the specific carbon material is 10 m$^2$/g or less, initial charge/discharge efficiency tends to improve.

The BET specific surface area of the specific carbon material is preferably 0.6 m$^2$/g or more, more preferably 0.7 m$^2$/g or more, further preferably 0.8 m$^2$/g or more. The BET specific surface area of the specific carbon material may be any one of 8 m$^2$/g or less, 6 m$^2$/g or less, or 5 m$^2$/g or less.

The BET specific surface area of the specific carbon material is obtained from a nitrogen adsorption property according to JIS Z 8830:2013. The measurement device may be AUTOSORB-1, Quantachrome, for example. Since a gas adsorption property of a sample material may be affected by moisture adsorbing to a surface or inside of the sample material, a pretreatment for removing moisture by heat is performed prior to the measurement of a BET specific surface area. After the pretreatment, a BET specific surface area of a sample material is measured at a temperature of 77K and a pressure range of less than 1 with respect to a relative pressure (a balance pressure to saturated vapor pressure).

In the pretreatment, a measurement cell containing 0.05 g of a sample material is decompressed to 10 Pa or less with a vacuum pump, and then heated at 110°C for 3 hours or more. Subsequently, the measurement cell is naturally cooled down to an ordinary temperature (25°C) while maintaining the measurement cell being decompressed.

The mass ratio of the negative-electrode active material and the solid electrolyte (negative-electrode active material:solid electrolyte) is preferably from 5:95 to 70:30, more preferably from 10:90 to 50:50, further preferably from 15:85 to 40:60.

The negative-electrode active material may include a specific carbon material alone, or may further include a negative-electrode active material other than a specific carbon material.

Examples of the negative-electrode active material other than a specific carbon material include a carbon material having an interplanar spacing ($d_{002}$) measured by XRD of 0.350 nm or more, a carbon material having a spring-back ratio of less than 13%, an oxide such as $Nb_2O_5$, $Li_4Ti_5O_{12}$ or SiO, and a metal or a metalloid such as In, Al, Si or Sn.

When the negative-electrode active material includes a specific carbon material and a negative-electrode active material other than a specific carbon material, the content of a specific carbon material with respect to a total amount of negative-electrode active material is preferably 50% by mass or more, more preferably 70% by mass or more, further preferably 80% by mass or more.

When the negative-electrode active material includes a specific carbon material and a negative-electrode active material other than a specific carbon material, the content of a specific carbon material with respect to a total amount of negative-electrode active material may be 99% by mass or less or 95% by mass or less.

The amount of a negative-electrode active material included in a negative electrode with respect to a total amount of components of the negative electrode (except a negative-electrode current collector and volatile components) may be any one of 10% by mass or more, 20% by mass or more, or 30% by mass or more.

The amount of a negative-electrode active material included in a negative electrode with respect to a total amount of components of the negative electrode (except a negative-electrode current collector and volatile components) may be any one of 95% by mass or less, 90% by mass or less, or 80% by mass or less.

(Solid electrolyte)

Generally speaking, the type of the solid electrolyte included in a negative electrode is not particularly limited, and may be selected from the materials that may be used as an electrolyte of all-solid-state batteries. Representative solid electrolytes include sulfide solid electrolytes, oxide solid electrolytes, and polymer solid electrolytes.

From the viewpoint of input characteristics, sulfide solid electrolytes and polymer solid electrolytes are preferred. From the viewpoint of thermal stability, sulfide solid electrolytes are more preferred.

The solid electrolyte may be used singly or in combination of two or more kinds. In the context of the claimed invention, the solid electrolyte is a sulfide solid electrolyte.

Examples of sulfide solid electrolytes include compounds including a metal element that acts as a conductive ion and sulfur (S).

Examples of the metal element include Li, Na, K, Mg and Ca. Among these, Li is preferred.

Sulfide solid electrolytes may include Li, S, and at least one selected from the group consisting of P, Si, Ge, Al and B. Among these, sulfide solid electrolytes including Li, S and P (hereinafter, also referred to as LPS sulfide solid electrolytes) are preferred.

From the viewpoint of ion conductivity, sulfide solid electrolytes may include a halogen element such as Cl, Br or I. From the viewpoint of chemical stability, sulfide solid electrolytes may include oxygen (O).

Specific examples of the LPS sulfide solid electrolyte include $Li_2S$-$P_2S_5$, $Li_2S$-$P_2S_5$-LiI, $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, LiI-$Li_2S$-$P_2O_5$, LiI-$Li_3PO_4$-$P_2S_5$, LiBr-LiI-$Li_2S$-$P_2S_5$, $Li_2S$-$P_2S_5$-$Z_mS_n$ (m and n are a positive number and Z is Ge, Zn or Ga), $Li_2S$-$GeS_2$, $Li_2S$-$SiS_2$-$Li_3PO_4$, $Li_2S$-$SiS_2$-$Li_xMO_y$ (x and y are a positive number and M is P, Si, Ge, B, Al, Ga or In).

In the foregoing, a sulfide solid electrolyte described as "$Li_2S$-$P_2S_5$" refers to a sulfide solid electrolyte obtained from $Li_2S$ and $P_2S_5$ as raw materials, and the same applies to the other sulfide solid electrolytes.

Among the LPS sulfide solid electrolytes, sulfide solid electrolytes obtained from $Li_2S$ and $P_2S_5$ are preferred, and sulfide solid electrolytes satisfying the following formula are more preferred.

$Li_{3+x+5y}P_{1-y}S_4$ ($0<x \leqq 0.6$, $0<y \leqq 0.2$)

Examples of oxide solid electrolytes include a compound having a NASICON ($Na_3Zr_2PSi_2O_{12}$) crystal structure. A compound having a NASICON crystal structure has a high degree of ion conductivity and excellent stability in the atmosphere.

Examples of the compound having a NASICON crystal structure include phosphoric salts including lithium, such as a complex of lithium phosphate and Ti (for example, $Li_{1+x}Al_xTi_{2-x}(PO_4)_3$ ); and a compound obtained by substituting at least part of Ti in the above-noted complex with a tetravalent transition metal such as Ge, Sn, Hf or Zr or a trivalent transition metal such as Al, Ga, In, Y or La.

Specific examples of the compound having a NASICON crystal structure include Li-Al-Ge-P-O materials ($Li_{1+x}Al_xGe_{2-x}(PO_4)_3$), Li-Al-Zr-P-O materials ($Li_{1+x}Al_xZr_{2-x}(PO_4)_3$), and Li-Al-Ti-P-O materials ($Li_{1+x}Al_xTi_{2-x}(PO_4)_3$).

Examples of polymer solid electrolytes include a mixture of a polymer compound and an electrolytic salt (complex).

Specific examples of the polymer compound include polyether-type polymer compounds such as polyethylene oxide (PEO) and polypropylene oxide (PPO), polyamine-type polymer compounds such as polyethylene imine (PEI), polysulfide-type polymer compounds such as polyalkylene sulfide (PAS). Among these, polyether-type polymer compounds are preferred.

Specific examples of the electrolytic salt include lithium salts such as $iPF_6$, $LiBF_4$, Li[FSI], Li[TFSI], Li[f3C], Li[BOB], $LiClO_4$, $LiBF_3(CF_3)$ , $LiBF_3(C_2F_5)$, $LiBF_3(C_3F_7)$, $LiBF_3(C_4F_9)$, $LiC(SO_2CF_3)_3$, $CF_3SO_2OLi$, $CF_3COOLi$ and RCOOLi (R is C1-C4 alkyl group, phenyl group or naphthyl group). Among these, imide-type lithium salts such as Li[FSI] and Li[TFSI] are preferred.

In the foregoing, [FSI] refers to a bis(fluorosulfonyl)imide anion, [TFSI] refers to a bis(trifluoromethanesulfonyl) imide anion, [BOB] refers to a bis(oxalate)borate anion, and [f3C] refers to a tris(fluorosulfonyl)carbanion.

The amount of a polymer compound in the mixture of a polymer compound and an electrolytic salt with respect to 1 mol of electrolytic salt may be any one of 1 mol or more, 5 mol or more, or 10 mol or more.

The amount of a polymer compound in the mixture of a polymer compound and an electrolytic salt with respect to 1 mol of electrolytic salt may be any one of 50 mol or less, 40 mol or less, or 30 mol or less.

The polymer solid electrolyte may be a polymer compound having ion conductivity (hereinafter, also referred to as an ion-conductive polymer compound).

The ion-conductive polymer compound may be in a state in which a base polymer is doped with a dopant. When a base polymer, which generally does not exhibit ion conductivity, is doped with a dopant, it is thought that the base polymer is oxidized or reduced and a pair of positive charge and negative charge is formed in the base polymer, whereby ion conduction pathways are formed in the base polymer.

The base polymer is not particularly limited, as long as it can be oxidized or reduced by a dopant. Specific examples of the base polymer include polyphenylene sulfide (PPS), poly(p-phenylene oxide) (PPO), polyetheretherketone (PEEK), polyphthalamide (PPA), polythiophene, polyaniline, polyacetylene, polythiazil, polydiacetylene, polypyrrole, poly(p-phenylene), polynaphthylelne, and polyanthracene.

The dopant may be either one of acceptor, which is a dopant having an ability to accept an electron, or a donor, which is a dopant having an ability to donate an electron. Namely, the dopant may be either one of an oxidant or a reductant.

Examples of the acceptor (oxidant) include halogens such as bromine, iodine and chlorine; Lewis acids such as $BF_3$, $PF_5$, $AsF_5$ and $SbF_5$; protonic acids such as $HNO_3$, $HSO_4$, $HClO_4$, HF, HCl, $FSO_3H$ and $CF_3SO_3H$; transition-metal halides such as $FeCl_3$, $MoCl_5$, $WCl_5$, $SnCl_4$, $MoF_5$, $RuF_5$, $TaBr_4$, $TaBr_5$ and $SnI_4$; organic compounds such as 2,3-dichloro-5,6-dicycano-p-benzoquinone (DDQ), tetrachloro-1,4-benzoquinone (chloranil), tetracyanoquinodimethane (TCNQ) and tetracyanoethylelne (TCNE); and oxygen. The acceptor may be used singly or in combination of two or more kinds.

Examples of the donor (reductant) include alkali metals such as Li, Na, K, Rb and Cs; alkaline-earth metals such as Be, Mg and Ca; ammonium salts such as tetraethyl ammonium salts and tetrabutyl ammonium salts; and hydrogen. The donor may be used singly or in combination of two or more kinds.

The mass ratio of a base polymer and a dopant (base polymer:dopant) is preferably from 99:1 to 20:80, more preferably from 95:5 to 30:70, further preferably from 90:10 to 50:50.

Examples of the method for doping a dopant into a base polymer include a method in which a base polymer is allowed to contact a vapor including a dopant obtained by evaporation of sublimation of a dopant. The base polymer may be formed into a sheet. The conditions for evaporation or sublimation of a dopant may be adjusted depending on the nature of the dopant. It is also possible to perform doping by means of an electrochemical treatment.

The amount of a solid electrolyte included in a negative electrode with respect to a total amount of components of the negative electrode (except a negative-electrode current collector and volatile components) may be any one of 1% by mass or more, 5% by mass or more, or 10% by mass or more.

The amount of a solid electrolyte included in a negative electrode with respect to a total amount of components of the negative electrode (except a negative-electrode current collector and volatile components) may be any one of 40% by mass or less, 30% by mass or less, or 20% by mass or less.

The solid electrolyte may be in a state of particles. When the solid electrolyte is in a state of particles, the volume average particle size of the solid electrolyte is preferably from 0.1 $\mu$m to 100 $\mu$m. When the volume average particle size of the solid electrolyte is 0.1 $\mu$m or more, it tends to be easier to mix a solid electrolyte with a carbon material. When the volume average particle size of the solid electrolyte is 100 $\mu$m or less, it tends to be easier to achieve a sufficient amount of battery capacity.

The volume average particle size of the solid electrolyte may be any one of 0.2 $\mu$m or more, 0.4 $\mu$m or more, or 0.5 $\mu$m or more.

The volume average particle size of the solid electrolyte may be any one of 80 $\mu$m or less, 60 $\mu$m or less, or 50 $\mu$m or less.

As necessary, the negative electrode may include a component other than a negative-electrode active material or a solid electrolyte. For example, the negative electrode may include a conductive material or a binder.

Examples of the conductive material include a carbon material such as acetylene black, carbon black or carbon fiber (except the above-noted negative-electrode active material). The conductive material may be included in the negative electrode material singly or in combination of two or more kinds.

The amount of a conductive material included in the negative electrode with respect to a total amount of components of the negative electrode (except a negative-electrode current collector and volatile components) may be any one of 0.1% by mass or more, 0.3% by mass or more, or 0.5% by mass or more.

The amount of a conductive material included in the negative electrode with respect to a total amount of components of the negative electrode (except a negative-electrode current collector and volatile components) may be any one of 5% by mass or less, 3% by mass or less, or 1% by mass or less.

Examples of the binder include tetrafluoroethylene, polymers obtained by polymerizing a monomer such as acrylic acid, maleic acid or ethyl methacrylate, styrene/butadiene rubber, isoprene rubber, and acrylic rubber.

When the negative electrode includes a component other than a negative-electrode active material or a solid electrolyte, a total amount of the negative-electrode active material and the solid electrolyte with respect to a total amount of components of the negative electrode (except a negative-electrode current collector and volatile components) may be any one of 99.9% by mass or less, 99% by mass or less, or 97% by mass or less.

When the negative electrode includes a component other than a negative-electrode active material or a solid electrolyte, a total amount of the negative-electrode active material and the solid electrolyte with respect to a total amount of components of the negative electrode (except a negative-electrode current collector and volatile components) may be any one of 85% by mass or more, 90% by mass or more, or 92% by mass or more.

(Negative-electrode current collector)

The negative electrode may have a configuration in which a layer including materials for the negative electrode (hereinafter, also referred to as a negative-electrode active-material layer) is formed on a negative-electrode current collector.

The material for the negative-electrode current collector is not particularly limited, and a conductive material including copper (Cu) is preferred. Examples of the conductive material including copper include a foil-like product such as an electrolytic copper foil, a rolled copper foil or a copper-alloy foil, a plate-like product, and a mesh-like product.

The thickness of the negative-electrode active-material layer formed on a negative-electrode current collector is not particularly limited, and may be selected depending on the size or the performance of an all-solid-state battery.

From the viewpoint of conductivity, the thickness of the negative-electrode active-material layer may be any one of 10 $\mu$m or more, 15 $\mu$m or more, or 20 $\mu$m or more.

From the viewpoint of suppressing the unevenness in charging/discharging due to uneven charging levels of a negative-electrode active material in the vicinity of the negative electrode, the thickness of the negative-electrode active-material layer may be any one of 100 $\mu$m or less, 75 $\mu$m or less, or 50 $\mu$m or less.

<All-solid-state battery>

The all-solid-state battery according to the present disclosure includes the negative electrode as mentioned above, a positive electrode, and a solid electrolyte layer that is disposed between the negative electrode and the positive electrode.

Fig. 1 is a schematic sectional view of an exemplary configuration of an all-solid-state battery.

All-solid-state battery 100 includes negative electrode 16 which includes negative-electrode active-material layer 12 and negative-electrode current collector 14; positive electrode 17 which includes positive-electrode active-material layer 13 and positive-electrode current collector 15; and solid electrolyte layer 11 that is disposed between negative electrode 16 and positive electrode 17.

In an embodiment, negative-electrode active-material layer 12 includes a negative-electrode active-material and a solid electrolyte of the same kind as a solid electrolyte included in solid electrolyte layer 11; and positive-electrode active-material layer 13 includes a positive-electrode active-material and a solid electrolyte of the same kind as a solid electrolyte included in solid electrolyte layer 11.

(Positive electrode)

The configuration of the positive electrode is not particularly limited, and may be selected from those commonly applied to a positive electrode of all-solid-state batteries. In an embodiment, the positive electrode includes a positive-electrode active material and a solid electrolyte.

Examples of the positive-electrode active material include lithium transition metal compounds, such as lithium transition metal oxides and lithium transition metal phosphates.

Examples of lithium transition metal oxides include lithium manganate, lithium nickelate, lithium cobaltate, and compounds obtained by partially substituting a transition metal such as Mn, Ni or Co in these lithium transition metal oxides with one or more kinds of transition metal or metal element (typical element) such as Mg or Al. Namely, lithium transition metal oxides may be a compound represented by $LiM^1O_2$ or $LiM^1_2O_4$ ($M^1$ includes at least one transition metal).

Specific examples of the lithium transition metal oxides include $Li(Co_{1/3}Ni_{1/3}Mn_{1/3})O_2$, $LiNi_{1/2}Mn_{1/2}O_2$, and $LiNi_{l/2}Mn_{3/2}O_4$.

From the viewpoint of improving the energy density, lithium transition metal oxides are preferably a compound represented by the following formula.

$$Li_aNi_bCo_cM2_dO_{2+e}$$

In the formula, $M^2$ is at least one selected from the group consisting of Al, Mn, Mg and Ca. Each of a, b, c, d and e satisfies $0.2 \leqq a \leqq 1.2$, $0.5 \leq b \leq 0.9$, $0.1 \leq c \leq 0.4$, $0 \leqq d \leqq 0.2$ and $-0.2 \leq e \leq 0.2$, and further satisfies b+c+d=1.

Specific examples of the lithium transition metal oxides include $LiFePO_4$, $LiMnPO_4$, $LiMn_xM3_{1-x}PO_4$ ($0.3 \leq x \leq 1$, $M^3$ is at least one selected from the group consisting of Fe, Ni, Co, Ti, Cu, Zn, Mg and Zr).

The positive-electrode active material may be included in the positive electrode singly or in combination of two or more kinds.

The positive-electrode active material is preferably in a state of particles. The positive-electrode active in a state of particles may be primary particles (not granulated) or secondary particles (granulated).

The volume average particle size of the positive-electrode active material may be any one of 0.1 $\mu$m or more, 1 $\mu$m or more, or 5 $\mu$m or more.

The volume average particle size of the positive-electrode active material may be any one of 30 $\mu$m or less, 25 $\mu$m or less, or 20 $\mu$m or less.

The amount of the positive-electrode active material included in the negative electrode with respect to a total amount of components of the negative electrode (except a positive-electrode current collector and volatile components) may be any one of 60% by mass or more, 65% by mass or more, or 70% by mass or more.

The amount of the positive-electrode active material included in the positive electrode with respect to a total amount of components of the positive electrode (except a positive-electrode current collector and volatile components) may be any one of 99% by mass or less, 95% by mass or less, or 90% by mass or less.

The solid electrolyte included in the positive electrode may be selected from the solid electrolytes that may be included in the negative electrode.

The positive electrode and the negative electrode may include a solid electrolyte of the same kind or different kinds from each other, preferably a solid electrolyte of the same kind.

The amount of the solid electrolyte included in the positive electrode with respect to a total amount of components of the positive electrode (except a positive-electrode current collector and volatile components) may be any one of 1% by mass or more, 5% by mass or more, or 10% by mass or more.

The amount of the solid electrolyte included in the positive electrode with respect to a total amount of components of the positive electrode (except a positive-electrode current collector and volatile components) may be any one of 40% by mass or less, 30% by mass or less, or 20% by mass or less.

The positive electrode may include a component other than a positive-electrode active material or a solid electrolyte, such as a conductive material or a binder. The conductive material and the binder that may be included in the negative electrode may be included in the positive electrode.

When the positive electrode includes a component other than a positive-electrode active material or a solid electrolyte, a total amount of the positive-electrode active material and the solid electrolyte with respect to a total amount of components of the positive electrode (except a positive-electrode current collector and volatile components) may be any one of 99.9% by mass or less, 99% by mass or less, or 97% by mass or less.

When the positive electrode includes a component other than a positive-electrode active material or a solid electrolyte, a total amount of the positive-electrode active material and the solid electrolyte with respect to a total amount of components of the positive electrode (except a positive-electrode current collector and volatile components) may be any one of 85% by mass or more, 90% by mass or more, or 92% by mass or more.

(Positive-electrode current collector)

The positive electrode may have a configuration in which a layer including materials for the positive electrode (hereinafter, also referred to as a positive-electrode active-material layer) is formed on a positive-electrode current collector.

The type of the positive-electrode current collector is not particularly limited, and examples thereof include a foil-like product, a plate-like product or a mesh-like product including a metal such as aluminum, stainless steel or titanium, or carbon.

The thickness of the positive-electrode active-material layer formed on the positive-electrode current collector is not particularly limited, and may be selected depending on the size or the properties of an all-solid-state battery.

From the viewpoint of conductivity, the thickness of the positive-electrode active-material layer may be any one of 10 $\mu$m or more, 15 $\mu$m or more, or 20 $\mu$m or more.

From the viewpoint of reducing the volume of the positive electrode, the thickness of the positive-electrode active-material layer may be any one of 100 $\mu$m or less, 75 $\mu$m or less, or 50 $\mu$m or less.

(Solid-electrolyte layer)

The solid-electrolyte layer has a function of mediating the migration of ions between the positive electrode and the negative electrode, and a function of electrically insulating the positive electrode from the negative electrode.

The solid electrolyte that is included in the solid-electrolyte layer may be selected from the above-noted solid electrolytes that may be included in the negative electrode or the positive electrode.

The solid-electrolyte layer and the negative electrode or the positive electrode may include a solid electrolyte of the same kind or different kinds from each other, preferably a solid electrolyte of the same kind.

The amount of a solid electrolyte included in the solid-electrolyte layer with respect to a total amount of components of the solid-electrolyte layer (except volatile components) may be any one of 30% by mass or more, 40% by mass or more, or 50% by mass or more.

The amount of a solid electrolyte included in the solid-electrolyte layer with respect to a total amount of components of the solid-electrolyte layer (except volatile components) may be any one of 100% by mass or less, 99% by mass or less, or 95% by mass or less.

As necessary, the solid-electrolyte layer may include a component other than a solid electrolyte. For example, the solid-electrolyte layer may include a binder, and examples thereof include the binder that may be included in the negative electrode.

The amount of a component other than a solid electrolyte included in the solid-electrolyte layer with respect to a total amount of components of the solid-electrolyte layer (except volatile components) may be any one of 1% by mass or more, 3% by mass or more, or 5% by mass or more.

The amount of a component other than a solid electrolyte included in the solid-electrolyte layer with respect to a total amount of components of the solid-electrolyte layer (except volatile components) may be any one of 50% by mass or less, 40% by mass or less, or 30% by mass or less.

The thickness of the solid-electrolyte layer is not particularly limited, and may be selected depending on the size or the properties of an all-solid-state battery.

From the viewpoint of strength and safety of an all-solid-state battery, the thickness of the solid-electrolyte layer may be any one of 5 $\mu$m or more, 10 $\mu$m or more, or 15 $\mu$m or more.

From the viewpoint of reducing the inner stress and improving the large-current characteristics, the thickness of the solid-electrolyte layer may be any one of 200 $\mu$m or less, 150 $\mu$m or less, or 100 $\mu$m or less.

<Negative-electrode active material for all-solid-state battery>

The negative-electrode active material for an all-solid-state battery according to the present disclosure consists of a carbon material that has an interplanar spacing ($d_{002}$) of from 0.336 nm to less than 0.350 and a spring-back ratio of 13% or more.

The all-solid-state battery using the above-noted negative-electrode active material exhibits excellent cycle characteristics, as compared with a conventional all-solid-state battery using a carbon material as a negative-electrode active material.

The negative-electrode active material is used for the production of the negative electrode or the all-solid-state battery as mentioned above, for example.

The details and preferred embodiments of the negative-electrode active material are the same as the details and preferred embodiments of the negative-electrode active material included in the above-noted negative electrode.

[Examples]

Hereinafter, the present disclosure is explained by referring to the Examples. It should be noted that the present disclosure is not limited to the Examples.

<Preparation of all-solid-state battery>

A mixture was prepared by mixing a solid electrolyte with each of carbon materials 1 to 8, having an interplanar spacing ($d_{002}$) measured by XRD and a spring-back ratio as shown in Table 1, at a mass ratio (carbon material: solid electrolyte) as described in Table 1.

As a solid electrolyte, a sulfide solid electrolyte obtained from $Li_2S$ (75 mol%) and $P_2S_5$ (25 mol%) and a polymer-type solid electrolyte obtained from a mixture (complex) prepared by mixing polyethylene oxide with Li[FSI] as an electrolytic salt at a molar ratio (polyethylene oxide:electrolytic salt) of 20:1 (referred to as PEO in Table 1) were used.

A negative electrode having a disk-like shape (thickness: 3 mm, diameter:10 mm) and a relative density of 90% was prepared by pressurizing the mixture of a carbon material and a solid electrolyte. The amount of the carbon material included in the mixture was calculated by a method as described below.

A solid-electrolyte layer having a disk-like shape (thickness: 5 mm, diameter:10 mm) and a relative density of 95% was prepared from a solid electrolyte that was used for the preparation of the negative electrode.

The negative electrode, the solid-electrolyte layer, and a lithium/indium alloy foil (counter electrode) were layered in this order and disposed in a coin-cell container (cell type: CR2032). The container was sealed with an insulating gasket, thereby obtaining a coin-shaped half cell as an all-solid-state battery for evaluation.

The following are the details of carbon materials 1 to 8.

Carbon material 1: A sample was obtained by loading coke A with an adjusted volume average particle size of 20 $\mu$m into a graphite crucible, elevating the temperature up to 3000°C in an inert atmosphere, and maintaining the temperature at 3000°C for 5 hours. The sample was used as carbon material 1.

Carbon material 2: A sample was obtained by loading coke B with an adjusted volume average particle size of 16 $\mu$m into a graphite crucible, elevating the temperature up to 1000°C in an inert atmosphere, and maintaining the temperature at 1000°C for 5 hours. The sample was used as carbon material 2.

Carbon material 3: A sample was obtained by loading coke B with an adjusted volume average particle size of 9 $\mu$m into a graphite crucible, elevating the temperature up to 3000°C in an inert atmosphere, and maintaining the temperature at 3000°C for 5 hours. The sample was used as carbon material 3.

Carbon material 4: A sample was obtained by loading coke B with an adjusted volume average particle size of 16 $\mu$m into a graphite crucible, elevating the temperature up to 1000°C in an inert atmosphere, maintaining the temperature at 1000°C for 5 hours, and removing fine particles by classification. The sample was used as carbon material 4.

Carbon material 5: A mixture of coke C with an adjusted volume average particle size of 15 $\mu$m and petroleum pitch at a mass ratio (coke C:petroleum pitch) of 97:3 was formed into a block. The block was loaded into a graphite crucible, and the temperature was elevated up to 3000°C in an inert atmosphere, and maintained at 3000°C for 5 hours. After cooling, the block was disintegrated by hand to obtain a sample. The sample was used as carbon material 5.

Carbon material 6: A sample was obtained by loading a mixture of coke B with an adjusted volume average particle size of 12 $\mu$m and coke B with an adjusted volume average particle size of 20 $\mu$m, at a mass ratio (12 $\mu$m :20 $\mu$m) of 50:50, into a graphite crucible, elevating the temperature up to 1000°C in an inert atmosphere, and maintaining the temperature at 1000°C for 5 hours. The sample was used as carbon material 6.

Carbon material 7: A mixture of coke B with an adjusted volume average particle size of 23 $\mu$m and petroleum pitch at a mass ratio (coke B:petroleum pitch) of 90:10 was formed into a block. The block was loaded into a graphite crucible, and the temperature was elevated up to 3000°C in an inert atmosphere, and maintained at 3000°C for 5 hours. After cooling, the block was disintegrated and classified to obtain a powder. The powder was mixed with petroleum pitch at a mass ratio (coke B:petroleum pitch) of 90:10. The mixture was loaded into a graphite crucible, and the temperature was elevated up to 1000°C in an inert atmosphere, and maintained at 1000°C for 5 hours, thereby obtaining a sample. The sample was used as carbon material 7.

Carbon material 8: Coke A having a volume average particle size of 16 $\mu$m was used as carbon material 8.

The following are the details of cokes A to C.

Coke A: Petroleum-based coke having a volume average particle size of 18 $\mu$m
Coke B: Coal-based coke having a volume average particle size of 14 $\mu$m
Coke C: Petroleum-based coke having a volume average particle size of 7 $\mu$m

<Calculation method for amount of carbon material in mixture>

(1) A carbon material used in the Examples and the Comparative Example was added with carboxymethylcellulose (CMC) as a thickening agent and styrene-butadiene rubber (SBR) as a binder at a mass ratio (carbon material:CMC:SBR) of 98:1:1. A slurry was obtained by adding purified water as a dispersant to the mixture and kneading the same. The slurry was applied onto both sides of a rolled copper foil (thickness: 10 $\mu$m) as a negative-electrode current collector uniformly at a predetermined amount for each side (5 mg/cm$^2$), thereby preparing a negative electrode. The density of the negative-electrode active-material layer was 1.3 g/cm$^3$.

(2) A coin-type cell was prepared using the negative electrode having a round shape with a diameter of 14 mm (mass of carbon material: 7.54 mg), a metallic Li plate having a round shape with a diameter of 15 mm, and a polyethylene single-layer separator with a thickness of 30 $\mu$m (HIPORE™, Asahi Kasei Corporation).

An aqueous solution for the coin-type cell was prepared by mixing ethylene carbonate (EC) as a cyclic carbonate, dimethyl carbonate (DMC) as a linear carbonate and ethylemethyl carbonate (EMC) as a linear carbonate at a volume ratio (EC:DMC:EMC) of 2:3:2, and adding lithium hexafluorophosphate (LiPF$_6$) 1.2 mol/L and vinylene carbonate (VC) 1.0% by mass to the mixture.

(3) In an environment of 25°C, the coin-type cell was charged at a constant current of 0.2CA until the voltage was 0V (vs. Li/Li+), and charged at a constant voltage of 0V until the current was 0.01CA (initial charge). Thereafter, the coin-type cell was discharged at a constant current of 0.2CA until the voltage was 1.5V (initial discharge) and an initial discharge capacity (mAh) was measured. An interval for 30 minutes was interposed between the charging and discharging.

(4) The mass of a carbon material (X mg) with which the coin-type cell has a discharge capacity of 0.3 mAh (cell-design capacity) was calculated by the following formula from the measured value of initial discharge capacity (Y mAh) and the mass of a carbon material included in the negative electrode (7.54 mg). The calculated value of the mass of a carbon material was applied to the mass of the carbon material in the mixture for the preparation of an all-solid-state battery.

$$X \text{ (mg)} = (7.54 \text{ mg}) \times 0.3 \text{ (mAh)})/Y \text{ (mAh)}$$

<Evaluation of capacity of all-solid-state battery>

The ratio of initial discharge capacity with respect to the cell-design capacity was calculated and used as an index for determining whether or not an all-solid-state battery works as designed.

In an environment of 25°C, an all-solid-state battery was charged at a constant current of 0.05CA until the voltage was -0.57V (vs. Li/In) and charged at a constant voltage of -0.57V until the current was 0.005CA. The capacity at this time is regarded as the initial charge capacity (mAh). After an interval of 30 minutes, the battery was discharged at a constant current of 0.05CA until the voltage was 1.0V (vs. Li/In). The capacity at this time is regarded as the initial discharge capacity (mAh).

The capacity evaluation (%) was calculated based on the initial discharge capacity and the cell-design capacity (0.3 mAh) by the following formula. The results are shown in Table 1.

$$\text{Capacity evaluation (\%)} = (\text{initial discharge capacity/cell-design capacity}) \times 100$$

<Measurement of capacity maintenance ratio and initial charge/discharge efficiency>

The charging and discharging were performed 10 cycles on an all-solid-state battery under the same conditions as the measurement of initial discharge capacity, and the discharge capacity at the 10th cycle was measured. The capacity maintenance ratio (%) and the initial charge/discharge efficiency (%) were calculated by the following formulas. The results are shown in Table 1.

Capacity maintenance ratio (%) = (discharge capacity at 10th cycle (mAh)/initial discharge capacity (mAh)) × 100 Initial charge/discharge efficiency (%) = (initial discharge capacity (mAh)/initial charge capacity (mAh)) × 100

Table 1

| | Negative electrode active material (X) | $d_{002}$ (nm) | Spring-back ratio (%) | $D_{50}$ ($\mu$m) | BET specific surface area (m$^2$/g) |
|---|---|---|---|---|---|
| Example 1 | Carbon material 1 | 0.336 | 25 | 20.3 | 1.8 |
| Example 2 | Carbon material 2 | 0.345 | 25 | 16.2 | 2.4 |
| Example 3 | Carbon material 3 | 0.336 | 13 | 9.2 | 2.4 |
| Example 4 | Carbon material 4 | 0.345 | 13 | 16.8 | 2.2 |
| Example 5 | Carbon material 5 | 0.336 | 50 | 15.2 | 2.2 |
| Example 6 | Carbon material 6 | 0.345 | 50 | 16.5 | 2.6 |
| Example 7 | Carbon material 1 | 0.336 | 25 | 20.3 | 1.8 |
| Example 8 | Carbon material 2 | 0.345 | 25 | 16.2 | 2.1 |
| Example 9 | Carbon material 1 | 0.336 | 25 | 20.3 | 1.8 |

(continued)

|  | Negative electrode active material (X) | $d_{002}$ (nm) | Spring-back ratio (%) | $D_{50}$ ($\mu$m) | BET specific surface area (m²/g) |
|---|---|---|---|---|---|
| Example 10 | Carbon material 2 | 0.345 | 25 | 16.2 | 2.1 |
| Comparative Example 1 | Carbon material 7 | 0.336 | 10 | 23.2 | 2.5 |
| Comparative Example 2 | Carbon material 8 | 0.350 | 30 | 16.3 | 2.6 |

|  | Solid electrolyte (Y) | X:Y (by mass) | Capacity evaluation (%) | Capacity maintenance ratio (%) | Initial charge/discharge efficiency (%) |
|---|---|---|---|---|---|
| Example 1 | LPS | 20:80 | 90 | 99 | 86 |
| Example 2 | LPS | 20:80 | 95 | 99 | 74 |
| Example 3 | LPS | 20:80 | 90 | 99 | 85 |
| Example 4 | LPS | 20:80 | 95 | 99 | 75 |
| Example 5 | LPS | 20:80 | 93 | 99 | 70 |
| Example 6 | LPS | 20:80 | 94 | 99 | 75 |
| Example 7 | PEO | 20:80 | 88 | 95 | 80 |
| Example 8 | PEO | 20:80 | 90 | 95 | 68 |
| Example 9 | LPS | 60:40 | 84 | 97 | 78 |
| Example 10 | LPS | 60:40 | 91 | 97 | 67 |
| Comparative Example 1 | LPS | 20:80 | 50 | 90 | 50 |
| Comparative Example 2 | LPS | 20:80 | 80 | 95 | 20 |

As shown in Table 1, the all-solid-state batteries of the Examples, in which a carbon material having an interplanar spacing ($d_{002}$) in XRD measurement of from 0.336 nm to less than 0.350 nm and a spring-back ratio of 13% or more is used as a negative-electrode active material, exhibit favorable results in capacity evaluation and capacity maintenance ratio, and exhibit favorable results in initial charge/discharge efficiency.

The all-solid-state battery of Comparative Example 1, in which a carbon material having an interplanar spacing ($d_{002}$) in XRD measurement of from 0.336 nm to less than 0.350 nm and a spring-back ratio of less than 13% is used as a negative-electrode active material, exhibits inferior results in capacity evaluation and capacity maintenance ratio as compared with the Examples.

The all-solid-state battery of Comparative Example 2, in which a carbon material having an interplanar spacing ($d_{002}$) in XRD measurement of 0.350 nm and a spring-back ratio of 13% or more is used as a negative-electrode active material, exhibits inferior results in initial charge/discharge efficiency as compared with the Examples.

**Claims**

1. A negative electrode for an all-solid-state battery, the negative electrode comprising a negative-electrode active material and a solid electrolyte, wherein the solid electrolyte is a sulfide solid electrolyte,
the negative-electrode active material comprising a carbon material that has an interplanar spacing ($d_{002}$) of from 0.336 nm to less than 0.350 nm and a spring-back ratio of 13% or more, wherein the spring-back ratio is measured as follows: 3.000 $\pm$0.005 grams of a carbon material is loaded into a cylindrical mold with a diameter of 15.0 mm; the carbon material is pressurized in a uniaxial manner with an autograph until the density of the carbon material reaches 1.65 g/cm³; then the amount of pressure is reduced to 0 N, and the carbon material is maintained at this state of 0 N for 30 seconds; then, the carbon material is pressurized with an autograph, and a density of the carbon material $\rho_{after}$ in g/cm³ is measured when the amount of pressure reaches 2N; and the spring-back ratio of the carbon material is calculated by the following equation:

$$\text{spring-back ratio } (\%) = \{(1.65 - \rho_{after})/1.65\} \times 100$$

**2.** The negative electrode for an all-solid-state battery according to claim 1, wherein the carbon material has a volume average particle size of from 5 $\mu$m to 30 $\mu$m.

**3.** The negative electrode for an all-solid-state battery according to claim 1 or claim 2, wherein the carbon material has a BET specific surface area based on a nitrogen adsorption capacity of from 0.5 $m^2/g$ to 10 $m^2/g$.

**4.** The negative electrode for an all-solid-state battery according to any one of claim 1 to claim 3, wherein a mass ratio of the negative-electrode active material and the solid electrolyte (negative-electrode active material:solid electrolyte) is from 5:95 to 70:30.

**5.** An all-solid-state battery, comprising the negative electrode for an all-solid-state battery according to any one of claim 1 to claim 4, a positive electrode, and a solid electrolyte layer that is disposed between the negative electrode for an all-solid-state battery and the positive electrode.

**Patentansprüche**

**1.** Negativelektrode für eine Festkörperbatterie, wobei die Negativelektrode ein Negativelektroden-Aktivmaterial und einen Festelektrolyten umfasst, wobei der Festelektrolyt ein Sulfid-Festelektrolyt ist,

wobei das Negativelektroden-Aktivmaterial ein Kohlenstoffmaterial umfasst, das einen Netzebenenabstand ($d_{002}$) von 0,336 nm bis weniger als 0,350 nm und ein Rückfederungsverhältnis von 13 % oder mehr aufweist, wobei das Rückfederungsverhältnis wie folgt gemessen wird:
3,000 $\pm$ 0,005 Gramm eines Kohlenstoffmaterials werden in eine zylindrische Form mit einem Durchmesser von 15,0 mm eingebracht; das Kohlenstoffmaterial wird einachsig mittels einer Autograph-Prüfmaschine unter Druck gesetzt, bis die Dichte des Kohlenstoffmaterials 1,65 $g/cm^3$ erreicht; anschließend wird der Druck auf 0 N verringert, und das Kohlenstoffmaterial wird 30 Sekunden lang in diesem Zustand von 0 N gehalten; anschließend wird das Kohlenstoffmaterial mittels einer Autograph-Prüfmaschine unter Druck gesetzt, und eine Dichte des Kohlenstoffmaterials $\rho_{nach}$ in $g/cm^3$ wird gemessen, wenn der Druck 2N erreicht; und das Rückfederungsverhältnis des Kohlenstoffmaterials wird anhand der folgenden Gleichung berechnet:

$$\text{Rückfederungsverhältnis (\%)} = \{(1{,}65 - \rho_{nach}) / 1{,}65\} \times 100$$

**2.** Negativelektrode für eine Festkörperbatterie nach Anspruch 1, wobei das Kohlenstoffmaterial eine volumenmittlere Teilchengröße von 5 $\mu$m bis 30 $\mu$m aufweist.

**3.** Negativelektrode für eine Festkörperbatterie nach Anspruch 1 oder Anspruch 2, wobei das Kohlenstoffmaterial eine BET-spezifische Oberfläche, basierend auf einer Stickstoffadsorptionskapazität, von 0,5 $m^2/g$ bis 10 $m^2/g$ aufweist.

**4.** Negativelektrode für eine Festkörperbatterie nach einem der Ansprüche 1 bis 3, wobei ein Massenverhältnis des Negativelektroden-Aktivmaterials und des Festelektrolyten (Negativelektroden-Aktivmaterial:Festelektrolyt) von 5:95 bis 70:30 beträgt.

**5.** Festkörperbatterie, umfassend die Negativelektrode für eine Festkörperbatterie nach einem der Ansprüche 1 bis 4, eine Positivelektrode und eine Festelektrolytschicht, die zwischen der Negativelektrode für eine Festkörperbatterie und der Positivelektrode angeordnet ist.

**Revendications**

**1.** Électrode négative pour une batterie tout solide, l'électrode négative comprenant un matériau actif d'électrode négative et un électrolyte solide, dans laquelle l'électrolyte solide est un électrolyte solide à base de sulfure, le matériau actif de l'électrode négative comprenant un matériau carboné ayant un espacement interplanaire ($d_{002}$) compris entre 0,336 nm et moins de 0,350 nm et un coefficient de retour élastique de 13 % ou plus, le coefficient de retour élastique étant mesuré comme suit : 3,000 $\pm$ 0,005 grammes d'un matériau carboné sont placés dans un moule cylindrique d'un diamètre de 15,0 mm ; le matériau carboné est mis sous pression de manière uniaxiale à l'aide d'un autographe jusqu'à ce que la densité du matériau carboné atteigne 1,65 $g/cm^3$ ; la quantité de pression est ensuite ramenée à 0 N, et le matériau carboné est maintenu dans cet état de 0 N pendant 30 secondes ; ensuite, le matériau carboné est mis sous pression à l'aide d'un autographe, et une densité du matériau carboné $\rho_{after}$ en g/cm$^3$ est mesurée lorsque la pression atteint 2 N ; et le taux de retour élastique du matériau carboné est calculé à l'aide de l'équation suivante :

$$\text{taux de retour élastique (\%)} = \{(1,65 - \rho_{after})/1,65\}\times100$$

2. Électrode négative pour une batterie tout solide selon la revendication 1, dans laquelle le matériau carboné a une taille moyenne en volume des particules comprise entre 5 $\mu$m et 30 $\mu$m.

3. Électrode négative pour une batterie tout solide selon la revendication 1 ou la revendication 2, dans laquelle le matériau carboné a une surface spécifique BET, en fonction d'une capacité d'adsorption d'azote, comprise entre 0,5 m$^2$/g à 10 m$^2$/g.

4. Électrode négative pour une batterie tout solide selon l'une quelconque des revendications 1 à 3, dans laquelle un rapport massique entre le matériau actif de l'électrode négative et l'électrolyte solide (matériau actif de l'électrode négative : électrolyte solide) est compris entre 5:95 et 70:30.

5. Batterie tout solide, comprenant l'électrode négative pour une batterie tout solide selon l'une quelconque des revendications 1 à 4, une électrode positive et une couche d'électrolyte solide disposée entre l'électrode négative pour la batterie tout solide et l'électrode positive.

FIG. 1

**EP 4 270 530 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018206487 A
- JP 2011134617 A
- US 2019237755 A1